# EUROPEAN PATENT APPLICATION

(11) **EP 4 403 327 A1**
(43) Date of publication of application: **24.07.2024**
(21) Application number: 24152770.4
(22) Date of filing: 19.01.2024
(51) Int. Cl.: B29B 17/04, C10C 3/00, C10C 3/14, E01C 19/10

(54) **RECYCLING METHOD OF POLYMERIC BITUMINOUS MEMBRANES**

(30) Priority: 20.01.2023 IT 202300000798
(71) Applicant: Tytech S.r.l, 66034 Lanciano (CH) (IT)
(72) Inventor: CERICOLA, Tommaso, Lanciano (CH) (IT)
(74) Representative: IP Sextant s.r.l.

(57) **Abstract**

Method (1) for producing improved bituminous granulate from exhausted polymeric bituminous membranes or manufacturing waste of polymeric bituminous membranes, the method comprising the following steps:
A. obtain a sample of the abovesaid polymeric bituminous membranes;
B. assessing the chemical-physical properties of the sample thereby obtained;
C. grinding the polymeric bituminous membranes until a bituminous granulate is obtained, the bituminous granulate having average dimensions lower than or equal to 15 mm, optionally lower than or equal to 5mm, more optionally lower than or equal to 2 mm;
D. mixing the bituminous granulate with at least one filler, selected by type and quantity based on the assessed chemical-physical properties of the sample at step B, until a bituminous granulate having a bitumen concentration greater than or equal to 75% is obtained.

## Description

The present invention relates to the field of bituminous membrane recycling and more specifically the recycling of polymeric bituminous membranes for the production of bituminous granulate.

Bituminous membranes are mainly used in the construction industry as insulation and waterproofing materials, particularly on roofs. The most widely used are polymeric bituminous membranes, which comprise:
- a bitumen slurry admixed with thermoplastic polymers; and
- a reinforcement having a fibrous reinforcing component embedded in the bitumen slurry.

Bituminous membranes, at the end of their lives, or their production waste are currently either sent for recovery by waste-to-energy or are landfilled, depending on their Lower Calorific Value (or I.C.P.).

Currently, there are two ways of recovering bituminous membranes that allow for a real valorization of the waste, but they find residual application in Europe compared to the disposal methods mentioned above.

The first recovery technique, popular mainly in Northern Europe, involves crushing them with milled asphalt, thereby obtaining a recovered product containing about 50% bitumen. This process, in addition to involving uncontrolled air emissions and a low-performing secondary raw material, involves mixing two different types of waste, a practice that is not allowed in all jurisdictions.

The second recovery technique, which is mainly used by companies that produce bituminous membranes, to recover their processing waste, is carried out by heating the exhausted and/or waste bituminous membranes up to 180° thus allowing the bitumen to be separated from the reinforcing ply, so that it can be used in the production cycle as a secondary raw material. This traditional thermal treatment process, however, has some limitations. In fact, it results in the emission of toxic hydrocarbon gases into the atmosphere, produces about 10% waste that must still be delivered to special storage sites, implies high operating and maintenance costs for recycling plants, and generates high amounts of CO₂.

There is therefore a need to improve the state of the art in the field of recycling polymer bituminous membranes, and the purpose of the present invention is therefore to enable the above limitations to be solved or at least mitigated.

It is a specific object of the present invention a method for producing improved bituminous granulate from exhausted polymeric bituminous membranes or production waste, the method comprising the following steps:
A. taking a sample of the said polymeric bituminous membranes;
B. assessing the chemical and physical characteristics of the sample thereby taken;
C. grinding the polymeric bituminous membranes until a bituminous granulate is obtained, the bituminous granulate having average dimensions lower than or equal to 15mm, optionally lower than or equal to 5mm, more optionally lower than or equal to 2 mm;
D. mixing said bituminous granulate with at least one filler, selected by type and quantity on the basis of the chemical and physical characteristics of the sample determined at step B, until bituminous granulate is obtained whose bitumen concentration is greater than or equal to 75 % by weight;
wherein
said step C comprises sub-steps:
   C1. carrying out a first grinding of the polymeric bituminous membranes until a first grinded material having average dimensions lower than 8 cm x 8 cm is obtained;
   C2. vitrifying the first grinded material;
   C3. carrying out a second grinding, wherein the vitrified first grinded material is grinded until a bituminous granule is obtained having said average dimensions lower than or equal to 15 mm, optionally lower than or equal to 5 mm, plus optionally lower than or equal to 2 mm;
      and wherein,
said sub-step C2 comprises, immersing the first grinded material obtained at sub-step C1 in a cryogenic bath, and wherein the first grinded material is immersed in the cryogenic bath on a conveyor belt connecting an outlet of a grinder where the first grinding takes place with a subsequent work station, where the second grinding is performed.

According to another aspect of the invention, the cryogenic bath may be a liquid Nitrogen bath in an amount of 0.2 liters to 0.7 liters per kg weight of first grinded material, optionally equal to 0.5 liters per kg weight of first grinded material, and optionally it can be at a temperature lower than or equal to -180°C.

It is also an object of the present invention a method for producing improved bituminous granulate from exhausted polymeric bituminous membranes or production waste, the method comprising the following steps:
A. taking a sample of the said polymeric bituminous membranes;
B. assessing the chemical and physical properties of the sample thereby taken;
C. grinding the polymeric bituminous membranes until a bituminous granulate is obtained, the bituminous granulate having average dimensions lower than or equal to 15mm, optionally lower than or equal to 5mm, more optionally lower than or equal to 2 mm;
D. mixing said bituminous granulate with at least one filler, selected by type and quantity on the basis of the chemical and physical properties of the sample determined at step B, until bituminous granulate is obtained whose bitumen concentration is greater than or equal to 75 % by weight;
wherein
said step C comprises sub-steps:
   C1. perform a first grinding of the polymeric bituminous membranes until a first grinded material having average dimensions of lower than 8 cm x 8 cm is obtained;
   C2. vitrifying the first grinded material;
   C3. performing a second grinding, wherein the vitrified first grinded material is grinded until a bituminous granule is obtained having said average dimensions lower than or equal to 15 mm, optionally lower than or equal to 5 mm, plus optionally lower than or equal to 2 mm;
   and wherein,
   said sub-step C2 comprises, nebulizing the first grinded material obtained at sub-step C1 with a cryogenic nebulization mixture.

According to another aspect of the invention, the cryogenic nebulization mixture comprises liquid Nitrogen in an amount between 0.2 liters and 0.7 liters per kg by weight of first grinded material, optionally amounting to 0.5 liters per kg by weight of first grinded material.

According to a further aspect of the invention, the nebulization is performed during a transport step of the first grinded material on a conveyor belt, optionally included in a cryogenic tunnel, that connects an outlet of a grinder where the first grinding takes place with a subsequent work station where the second grinding is performed.

According to a further aspect of the invention, the conveyor belt can optionally be made of stainless steel and insulated.

According to an additional aspect of the invention, said step B may include at least:
- carrying out a spectrographic examination on said sample, and
- determining the softening point of said sample, and/or determining the penetration point of said sample, and/or determining the percentage weight of bitumen in said sample.

According to a further aspect of the invention, with the first grinding of polymeric bituminous membranes, at sub-step C1, a first grinded material of average dimensions lower than or equal to 5 cm x 5 cm can be obtained.

According to another aspect of the invention, sub-step C1 can comprise:
C1.1 grinding the bituminous membranes, optionally with a twin-shaft mill, thereby obtaining a first intermediate grinded material;
C1.2 grinding the first intermediate grinded material, optionally with a twin-shaft mill, thereby obtaining a second intermediate grinded material;
C1.3 measuring the average dimensions of the second intermediate grinded material and if it is lower than about 8 cm x 8 cm; then
C1.4 delivering the first grinded material thus obtained; otherwise
C1.5 returning to step C1.1.

According to another aspect of the invention, step C3 may comprise grinding the first grinded material, that was cooled to step C2, optionally with a blade mill, until the granulate has said average dimensions lower than or equal to 15 mm, optionally lower than or equal to 5 mm, more optionally lower than or equal to 2 mm.

According to a further aspect of the invention, an intermediate CD step may be provided, between the end of step C and the beginning of step D, wherein the bituminous granulate is moved by a flow of air to a packaging station, and the air used for such movement, prior to its re-entry into the environment, is filtered, optionally by means of suitable bag filters and/or activated carbon.

According to an additional aspect of the invention, the filler, optionally an inert filler with anticoagulant functions selected from calcium carbonate and/or fine sand and/or crushed stone, can be mixed with said bituminous granulate in a percentage amount by weight between 1% to 8%, optionally comprised between 3% to 5%.

It is also a specific object of the invention a bituminous conglomerate, comprising inert material in an amount by weight between 90% and 97%, optionally 95%, and bitumen in a corresponding amount by weight between 10% and 3%, optionally 5%, wherein, of said bitumen:
- a weight percentage amount between 15% and 50%, optionally equal to 30%, is derived from polymeric bituminous membranes treated according to the method described above, and
- a corresponding weight percentage amount between 85% and 50%, optionally 70%, is derived traditionally from the distillation of petroleum.

The present invention will now be described, by way of illustration but not limitation, according to its preferred embodiments, with special reference to the attached Figures, wherein:

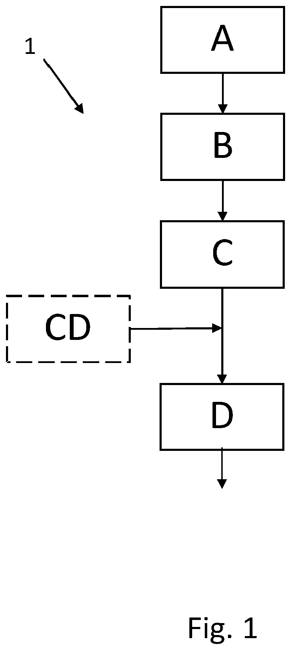

Figure 1 illustrates the main steps of the method of the invention;

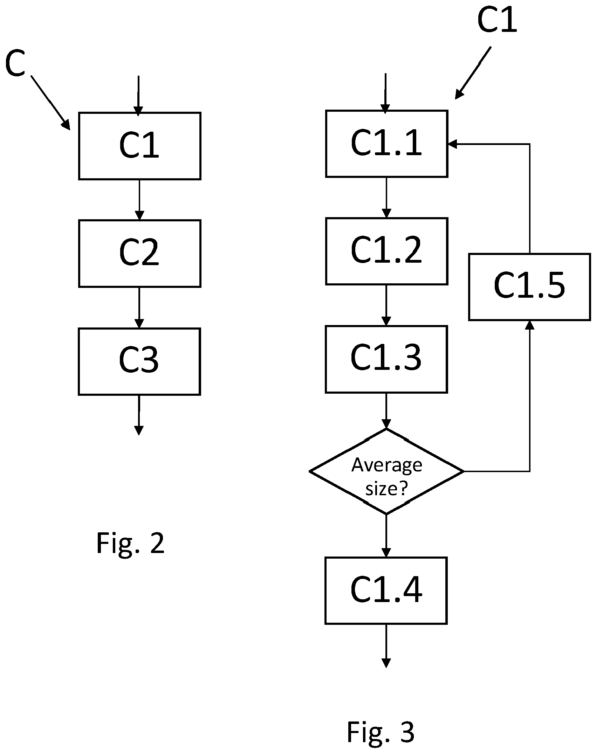

Figure 2 shows a detail of one of the steps of the method in Figure 1; and
Figure 3 illustrates some sub-steps of the detail in Figure 2.

In those Figures, it can be seen that the method for producing improved bituminous granulate from exhausted polymeric bituminous membranes or production waste of such polymeric bituminous membranes, according to the present invention, is denoted by reference number 1 and includes the following steps:
A. taking a sample of the abovesaid polymeric bituminous membranes;
B. assessing the chemical and physical characteristics of the sample thereby taken;
C. grinding the polymeric bituminous membranes until a bituminous granulate is obtained, the bituminous granulate having average dimensions lower than or equal to 15 mm, optionally lower than or equal to 5mm, more optionally lower than or equal to 2 mm;
D. mixing said bituminous granulate with at least one filler, selected by type and quantity on the basis of the chemical and physical characteristics of the sample determined at step B, until bituminous granulate is obtained whose bitumen concentration is greater than or equal to 75 % by weight.

With regard to step B of characterization from the chemical-physical point of view of the sample taken at step A, the method of the present invention, according to one of its preferred embodiments, comprises the performance of at least one spectrographic examination, aimed at determining the main polymer matrix, i.e., the one present in the greatest quantity in the sample under examination, usually attactic polypropylene (or APP) or styrene-butadiene-styrene (SBS) and one or more examinations of choice aimed at determining, in the sample: the softening point (e.g., according to EN 1427), the penetration point (e.g., according to EN 1426), the percentage weight of bitumen contained in the sample (e.g., according to EN 12697-1).

In any case, the person skilled in the art will have no difficulty in understanding that the characterization from the chemical and physical point of view of the sample taken can be implemented by performing other types of examinations suitable for the purpose.

Once the sample has been characterized chemically and physically, the polymeric bituminous membranes from which it was extracted are ground at step C. In this step, according to a preferred embodiment of the invention, the polymeric bituminous membranes undergo a first grinding (sub-step C1), until a first grinded material is obtained having average dimensions of lower than about 8 cm x 8 cm, optionally lower than or equal to 5 cm x 5 cm. The first grinded material is then vitrified at sub-step C2, and a second grinding (sub-step C3) is then performed, wherein the vitrified first grinder is again grinded to obtain a bituminous granulate having said average dimensions lower than or equal to 15mm, optionally lower than or equal to 5mm, more optionally lower than or equal to 2mm.

Regarding the first grinding, according to the invention, this involves:
C1.1 grinding the bituminous membranes, thus obtaining a first intermediate grinded material;
C1.2 grinding the first intermediate grinded material, thereby obtaining a second intermediate grinded material;
C1.3 measuring the average dimensions of the second intermediate grinded material and if these are lower than about 8 cm x 8 cm; then
C1.4 delivering the first grinded material thus obtained; otherwise
C1.5 returning to step C1.1.

Advantageously, the prior grinding of bituminous membranes and the grinding of the first intermediate grinded material is performed with a grinder, optionally a twin-shaft mill.

As far as the vitrification of the first grinded material thus obtained is concerned, according to a preferred form of embodiment of the invention, this is advantageously done by immersing it in a cryogenic bath, optionally a cryogenic bath based on liquid Nitrogen in an amount between 0.2 liters and 0.7 liters per kg by weight of the first grinded material, optionally equal to 0.5 liters per kg by weight of first grinded material. The cryogenic bath, according to a preferred embodiment of the invention, is at a temperature lower than or equal to -180°C, and the immersion of the first grinded material lasts for at least 3 seconds.

According to an advantageous aspect of the invention, the immersion of the first grinded material in the cryogenic bath occurs during a transport step, on a conveyor belt which connects an outlet of the grinder where the first grinding takes place with a subsequent workstation where the second grinding is performed. According to a preferred embodiment of the invention, the conveyor belt is made of stainless steel and is insulated in a manner known to the person skilled in the art.

As an alternative to the above-described immersion of the first grinded material into the cryogenic bath, vitrification of the first grinded material may be accomplished, according to another preferred embodiment of the invention, by nebulization of the first grinded material by means of a cryogenic nebulization mixture comprising liquid Nitrogen in an amount between 0.2 liters and 0.7 liters per kg by weight of first grinded material, optionally 0.5 liters per kg by weight of first grinded material.

The cryogenic nebulization mixture is nebulized onto the first grinded material during a transportation stage thereof on the conveyor belt that connects an outlet of the grinder where the first grinding takes place with a subsequent workstation where the second grinding is performed. Again, the conveyor belt is made of stainless steel and insulated. For example, the conveyor belt is housed inside a cryogenic tunnel of a type suitable for the purpose.

The second grinding, which according to a preferred embodiment of the invention is carried out with a blade mill, lasts for the time necessary to reduce the vitrified first grinded material to a granulate whose granules have said average dimensions lower than or equal to 15 mm, optionally lower than or equal to 5 mm, more optionally advantageously lower than or equal to 2 mm. Indeed, the applicant has in fact verified that with granules of those dimensions, the obtained bituminous granules can easily be used, as will be seen below, for the production of conglomerate or new bituminous membrane. Preliminary tests have indeed shown that with the above average dimensions lower than 2 mm, the bituminous granulate melts more easily and allows greater dispersion of the fiber than bituminous granulate obtained by alternative recycling methods.

According to a particularly advantageous aspect of the invention, method 1 subsequently provides for a step D of adjusting the concentration of the bitumen contained in the bituminous granulate thus obtained so that it is greater than or equal to 75% by weight percentage, optionally greater than or equal to 80%. adjustment is made on the basis of the chemical and physical characteristics of the sample, determined at step B above, and comprises the addition in the bituminous granulate obtained, of a filler selected by type and quantity from among one or more inert fillers with anticoagulant functions, e.g. calcium carbonate and/orfine sand and/or crushed stone and/or other material that is in any case compatible with the production of bituminous conglomerate indicated by the UNI EN 12620 standards on Aggregates for Concrete, and by the UNI EN 13043 standards on Aggregates for Bituminous Mixtures and Surface Treatments for Roads, and by the UNI EN 13242 standards on Aggregates for unbound materials and materials bonded with hydraulically bonding materials for use in engineering works.

The filler is added to the obtained bituminous granulate, in an amount by weight percentage between 1% and 8%, optionally comprised between 2% and 6%, more optionally between 3% and 5%. In this way, the improved bituminous granulate according to method 1 of the invention basically comprises:
- a quantity of bitumen derived from treated polymeric bituminous membranes, comprised between 75% and 94% by percentual weight;
- a quantity of inert filler, optionally calcium carbonate between 1% and 8%, optionally between 2% and 6%, more optionally between 3% and 5%.
- the remaining part, predominantly fibrous material, e.g., glass fiber from the reinforcement of the treated bituminous matrix, and polyesters, in a corresponding percentual weight quantity such that the percentual sum of all the above components of the bituminous granulate is 100%.

In this regard, it is to be considered that up to now, the bituminous granulate from the recycling of exhausted bituminous membranes available on the market has percentages around 50% of bitumen, while the bitumen percentages of the granulate produced according to the present invention is 75% or more, resulting in a second raw material with a very high performance compared to that offered on the market today. Thus, for example, it was verified that with the method 1 of the invention it is possible to produce an improved bituminous granulate from APP-based bituminous membranes having the following characteristics:
v' softening point (determined according to the UNI EN 1427 standards) greater than or equal to 90°C;
✔ penetration point (determined according to UNI EN 1426 standards) greater than or equal to 8 mm;
✔ grain size (determined according to UNI EN 12697-2 standards) between 0-15 mm;
✔ percentage content of bitumen (determined according to UNI EN 12697-1 standards) greater than or equal to 75%;
   and an improved bituminous granulate from SBS-based bituminous membranes, having the following characteristics:
v' softening point (determined according to UNI EN 1427 standards) greater than or equal to 90°C;
✔ penetration point (determined according to UNI EN 1426 standards) greater than or equal to 15 mm;
✔ grain size (determined according to UNI EN 12697-2 standards) between 0-15 mmm;
✔ bitumen percentual content (determined according to UNI EN 12697-1 standards) greater than or equal to 75%.

According to a further advantageous aspect of the invention, between the end of step C and the beginning of step D of the method of the invention, there is provided an intermediate step CD wherein the obtained bituminous granulate is transported by a flow of air to a packaging station, and the air used for such transport, which also removes from the bituminous granulate any undesirable residues, e.g., dust comprising hydrocarbons, before it is reintroduced into the environment is filtered, e.g., by means of special bag filters and/or active carbons, to keep emissions within legal limits..

With such an improved bituminous granulate, a high-performance bituminous conglomerate, commonly referred to as "asphalt", can be produced, offering performance increase typical of modified bitumen. In particular, preliminary tests have shown that the bituminous conglomerate produced with the bituminous granulate of the invention has better mechanical properties at high temperatures (high thermal stability).

Such a bituminous conglomerate comprises inert material in weight quantity comprised between 90% and 97%, optionally equal to 95%, and bitumen in a corresponding weight quantity comprised between 10% and 3%, optionally equal to 5%, wherein, of said bitumen:
- one percentual weight quantity comprised between 15% and 50% of said bitumen, optionally equal to 30%, is from exhausted polymeric bituminous membranes or processing waste thereof which are processed according to the method of the present invention, and
- one corresponding percentual weight quantity between 85% and 50%, optionally equal to 70%, is obtained in a conventional way from petroleum distillation.

In view of the above, the advantages offered by the present invention are apparent.

First of all, the method according to the present invention makes it possible to fully recover polymeric bituminous membranes at the end of their service life, without the production of any kind of waste. In fact, polymeric bituminous membranes recycled according to the method described above can be advantageously used in the form of improved bituminous granulate, for the production of both bituminous conglomerate (asphalt), as described above, and as the main component of new bituminous membranes.

Not only that, the production method of the present invention, being performed at cold temperatures, avoids any dispersion of hydrocarbon gases into the atmosphere and is also sustainable from the point of view of operating costs, which are undoubtedly lower than the traditional thermal treatment process of bituminous membranes. In addition, the sample characterization of polymeric bituminous membranes upstream of the grinding stage makes it possible to produce different types of products, based on the detected characteristics of polymeric bituminous membranes, and to ensure consistent performance of each type of product. It also makes it possible to optimize and speed up the subsequent steps of the method, which is thus also less expensive than a traditional method, wherein a characterization downstream of the grinding, would require much more expensive analyses to determine the properties of the bitumen contained in the improved bituminous granulate obtained.

In the foregoing, preferred embodiments have been described and variations of the present invention have been suggested, but it is to be understood that those skilled in the art may make modifications and changes without thereby departing from the relevant scope of protection as defined by the appended claims.

Thus, for example, vitrification step C2 can alternatively be implemented through use of a different cryogenic bath or a different cryogenic nebulization mixture or through use of a gas or in any other suitable manner, without thereby departing from the scope of protection of the present invention. The same applies to step C3 of second grinding, which can also be implemented by means of a hammer mill or other suitable machine for the purpose.

Not only that, according to an alternative embodiment of the invention, the grinding step C can also be carried out in a single step, such as by passing the said bituminous membranes through a twin-shaft mill and/or a blade mill and/or a hammer mill, until the desired grain size of the bituminous granules is obtained, of average dimensions lower than or equal to 15mm, optionally lower than or equal to 5mm, more optionally lower than or equal to 2mm.

Finally, according to a variant of the present invention, in addition to or as an alternative to the above-mentioned filler, virgin bitumen and/or polymers compatible with bituminous conglomerate production, such as APP (attactic polypropylene) or SBS (Styrene-Butadiene-Styrene) based polymers, plastomeric polymer blends, graphene-based polymeric modifiers, recovered plastics and/or modifiers based on fibers of different nature (such as, mineral and/or synthetic cellulose) and/or synthetic bituminous emulsions including with recovered material, stabilizing additives for improving long-term stability and performance, synthetic latexes, mortars and/or paints for coloring, and/or chemical modifiers, foaming agents, anti-ice additives, waxes and/or any other type of additive, to improve the performance of the product as is, can be added. Also in this case, the possible use as an alternative or in addition of the above materials will be in percentual weight quantities between 1 and 8%, optionally between 2% and 6% percent, more optionally between 3% and 5%, so that the percentual sum of all components of the bituminous granulate is 100%.

## Claims

1. Method (1) for producing improved bituminous granulate from exhausted polymeric bituminous membranes or production waste, the method comprising the following steps:
A. taking a sample of the said polymeric bituminous membranes;
B. assessing the chemical and physical properties of the sample thereby taken;
C. grinding the polymeric bituminous membranes until a bituminous granulate is obtained, the bituminous granulate having average dimensions lower than or equal to 15mm, optionally lower than or equal to 5mm, more optionally lower than or equal to 2 mm;
D. mixing said bituminous granulate with at least one filler, selected by type and quantity on the basis of the chemical and physical properties of the sample determined at step B, until bituminous granulate is obtained whose bitumen concentration is greater than or equal to 75 % by weight;
wherein said step C comprises sub-steps:
C1. carrying out a first grinding of the polymeric bituminous membranes until a first grinded material having average dimensions lower than 8 cm x 8 cm is obtained;
C2. vitrifying the first grinded material;
C3. carrying out a second grinding, wherein the vitrified first grinded material is grinded until a bituminous granule is obtained having said average dimensions lower than or equal to 15 mm, optionally lower than or equal to 5 mm, plus optionally lower than or equal to 2 mm;
and wherein,
said sub-step C2 comprises, immersing the first grinded material obtained at sub-step C1 in a cryogenic bath, and wherein the first grinded material is immersed in the cryogenic bath on a conveyor belt connecting an outlet of a grinder where the first grinding takes place with a subsequent workstation, where the second grinding is performed.

2. Method (1) according to any previous claim, wherein the cryogenic bath may be a liquid Nitrogen bath in an amount of 0.2 liters to 0.7 liters per kg weight of first grinded material, optionally equal to 0.5 liters per kg weight of first grinded material, and optionally it can be at a temperature lower than or equal to -180°C.

3. Method (1) for producing improved bituminous granulate from exhausted polymeric bituminous membranes or production waste, the method comprising the following steps:
A. taking a sample of the said polymeric bituminous membranes;
B. assessing the chemical and physical properties of the sample thereby taken;
C. grinding the polymeric bituminous membranes until a bituminous granulate is obtained, the bituminous granulate having average dimensions lower than or equal to 15 mm, optionally lower than or equal to 5mm, more optionally lower than or equal to 2 mm;
D. mixing said bituminous granulate with at least one filler, selected by type and quantity on the basis of the chemical and physical properties of the sample determined at step B, until bituminous granulate is obtained whose bitumen concentration is greater than or equal to 75 % by weight;
wherein
said step C comprises sub-steps:
C1. perform a first grinding of the polymeric bituminous membranes until a first grinded material having average dimensions of lower than 8 cm x 8 cm is obtained;
C2. vitrifying the first grinded material;
C3. performing a second grinding, wherein the vitrified first grinded material is grinded until a bituminous granule is obtained having said average dimensions lower than or equal to 15 mm, optionally lower than or equal to 5 mm, plus optionally lower than or equal to 2 mm;
and wherein,
said sub-step C2 comprises, nebulizing the first grinded material obtained at sub-step C1 with a cryogenic nebulization mixture.

4. Method (1) according to claim 3, wherein, the cryogenic nebulization mixture comprises liquid Nitrogen in an amount between 0.2 liters and 0.7 liters per kg by weight of first grinded material, optionally amounting to 0.5 liters per kg by weight of first grinded material.

5. Method (1) according to claim 3 or 4, wherein the nebulization is performed during a transport step of the first grinded material on a conveyor belt, optionally included in a cryogenic tunnel, that connects an outlet of a grinder where the first grinding takes place with a subsequent workstation where the second grinding is performed.

6. Method (1) according to any previous claim, wherein the conveyor belt is made of stainless steel and insulated.

7. Method (1) according to any previous claim, wherein said step B includes at least:
- carrying out a spectrographic examination on said sample, and
- determining the softening point of said sample, and/or determining the penetration point of said sample, and/or determining the percentage weight of bitumen in said sample.

8. Method (1) according to any previous claim, wherein with the first grinding of polymeric bituminous membranes, at sub-step C1, a first grinded material of average dimensions lower than or equal to 5 cm x 5 cm is obtained.

9. Method (1) according to any previous claim, wherein sub-step C1 comprises:
C1.1 grinding the bituminous membranes, optionally with a twin-shaft mill, thereby obtaining a first intermediate grinded material;
C1.2 grinding the first intermediate grinded material, optionally with a twin-shaft mill, thereby obtaining a second intermediate grinded material;
C1.3 measuring the average dimensions of the second intermediate grinded material and if it is lower than about 8 cm x 8 cm; then
C1.4 delivering the first grinded material thus obtained; otherwise
C1.5 returning to step C1.1.

10. Method (1) according to any previous claim, wherein step C3 comprises grinding the first grinded material, that was cooled to step C2, optionally with a blade mill, until the granulate has said average dimensions lower than or equal to 15 mm, optionally lower than or equal to 5 mm, more optionally lower than or equal to 2 mm.

11. Method (1) according to any previous claim, wherein an intermediate CD step is provided, between the end of step C and the beginning of step D, wherein the bituminous granulate is moved by a flow of air to a packaging station, and the air used for such movement, prior to its re-entry into the environment, is filtered, optionally by means of suitable bag filters and/or activated carbon.

12. Method (1) according to any previous claim wherein the filler, optionally an inert filler with anticoagulant functions selected from calcium carbonate and/or fine sand and/or crushed stone, is mixed with said bituminous granulate in a percentage amount by weight between 1% to 8%, optionally comprised between 3% to 5%.

13. Bituminous conglomerate, comprising inert material in an amount by weight between 90% and 97%, optionally 95%, and bitumen in a corresponding amount by weight between 10% and 3%, optionally 5%, wherein, of said bitumen:
- a weight percentage amount between 15% and 50%, optionally equal to 30%, is derived from polymeric bituminous membranes treated according to the method described above, and a corresponding weight percentage amount between 85% and 50%, optionally 70%, is derived traditionally from the distillation of petroleum.
